# EUROPEAN PATENT APPLICATION

(11) **EP 1 821 253 A1**
(43) Date of publication of application: **22.08.2007**
(21) Application number: 07250617.3
(22) Date of filing: 15.02.2007
(51) Int. Cl.: G06Q 30/00, G06T 17/00, G06F 17/50

(54) **Parts catalog system, method and program to generate parts catalog and recording medium storing the program**

(30) Priority: 17.02.2006 JP 2006040628
(71) Applicant: Ricoh Company, Ltd., Tokyo 143-8555 (JP)
(72) Inventor: Yamagata, Junichi,, Tokyo 143-8555 (JP); Satoh, Naoyuki, Tokyo 143-8555 (JP); Kagata, Masaaki, Tokyo 143-8555 (JP)
(74) Representative: Leeming, John Gerard

(57) **Abstract**

A parts catalog system (10) includes an image generator, an attribute data generator, a database (31), and a catalog generator (44). The image generator (40) generates an illustration image of a part and installation diagram data in which the part is installed in a unit from three-dimensional model data (46). The attribute data generator (42) generates attribute data including region information by determining a region of the illustration image in the installation diagram based on the three-dimensional model data (46). The catalog generator (44) generates a keyword to search the part and stores the keyword in the database (31) in association with the illustration image, the installation diagram data, and the attribute data. A catalog generation method includes a step for generating an illustration image and installation diagram data of a part from three-dimensional model data (46), a step for generating attribute data including a region information by determining a region of the illustration image in the installation diagram data, and a step for generating a keyword to search the part and for storing the keyword in association with the illustration image, the installation diagram data, and the attribute data.

## Description

The present invention generally relates to a parts catalog system, a parts catalog generation method, a parts catalog generation program, and a recording medium storing the parts catalog generation program.

In general, machine products integrally include a number of parts and/or units. These parts or units may be numbered for purposes of ordering, storage control, etc and systematically listed in a parts catalog. In such a parts catalog, each part or unit may be accompanied by information, for example, installation information and constituent parts for identification.

One type of parts catalog system includes exploded diagrams of a machine and illustrations of each part and each unit included in the machine. In the exploded diagrams, lead lines, notations, and/or part numbers are added to each part or unit. Part names and/or information of the parts may be written in a parts table in association with the part numbers. When a customer orders a part based on the parts catalog system, the customer looks for the part from the exploded diagram and notes its part number. The customer refers to the parts table to obtain the name and information of the part.

Methods to generate a part catalog have been developed. In one method, a drawing of a part is created with a drawing terminal such as a CAD system. Data of the drawing is divided into image data and search data such as a drawing number. The image data may be stored in an image region of a drawing file. The search data may be stored in a text region of the drawing file. Attribute data of the part may be input and stored in an attribute data file. A database is generated per module (e.g. a product, a section, an assembly, a unit, and a part). The attribute data includes constituent information about constituent parts and/or units included in each module. Relations among parts are determined based on the constituent information. A parts catalog may be automatically created using the above data.

However, in the case of a complicated machine including many component parts, its parts catalogs may not meet the need of customers if three-dimensional positional relations among the component parts are recognizable in the parts catalog in addition to planer positional relations among the component parts.

Various embodiments disclosed herein describe a parts catalog system. In one embodiment, a parts catalog system includes an image generator, an attribute data generator, a database, and a catalog generator. The image generator generates an illustration image of a part and installation diagram data in which the part is installed in a unit from three-dimensional model data. The attribute data generator generates attribute data including region information by determining a region of the illustration image in the installation diagram data based on the three-dimensional model data. The database stores the illustration image, and the installation diagram data. The catalog generator generates a keyword to search the part and stores the keyword in the database in association with the illustration image, the installation diagram data, and the attribute data.

In another embodiment, a catalog generation method includes a step for generating an illustration image of a part and installation diagram data in which the part is installed in a unit from three-dimensional model data, a step for generating attribute data including a region information by determining a region of the illustration image in the installation diagram data based on the three-dimensional model data, and a step for generating a keyword to search the part and for storing the keyword in association with the illustration image, the installation diagram data, and the attribute data.

In another embodiment, a parts catalog system includes a means for receiving a keyword to search a part, a database, a means for searching an illustration image and installation diagram data, referring to the database, a display to display the searched illustration image, and a means for superimposing the illustration image onto the installation diagram data viewed from a similar viewpoint concerning the part by using attribute data to specify region information and a relative position of the illustration image in the installation diagram data in accordance with an input from outside and for displaying the installation diagram on a display. The database stores the keyword, the illustration image of the part, and installation diagram data in which the part is installed in a unit in association with each other.

In the above embodiments, an operator may create a part list via a GUI (graphic user interface), while graphically recognizing the relation of a part in a unit. Not only planer relations, but also three-dimensional relations between parts may be recognized. The operator may obtain necessary information of a part without referring to a part table by using the parts catalog system according to embodiments. By effectively using the GUI, the time required to search a part to manufacture, to order, and/or to repair may be shortened.

A more complete appreciation of the disclosure and many of the attendant advantages thereof will be readily obtained as the same becomes better understood by reference to the following detailed description when considered in connection with the accompanying drawings, wherein:
FIG. 1 is a block diagram illustrating a hardware configuration of a parts catalog system according to an embodiment;
FIG. 2 is a block diagram illustrating a software configuration of the parts catalog system of FIG. 1;
FIG. 3 is a flowchart of a catalog generation method using the parts catalog system of FIG. 1;
FIG. 4 is an illustration for explaining an illustration and installation diagrams of a part generated by the parts catalog system of FIG. 1,
FIGs. 5A, 5B, 5C, 5D are illustrations for explaining methods to generate region information of a part according to an embodiment;
FIG. 6 is an example hierarchical structure of parts structure data according to an embodiment;
FIG. 7 is an example structure of a parts catalog according to an embodiment;
FIGs. 8A, 8B, 8C, and 8D are illustrations for explaining enlargement and reduction of an installation diagram;
FIGs. 9A, 9B, 9C, and 9D are examples of installation diagrams from different viewpoints;
FIGs. 10A and 10B are examples of installation diagrams;
FIG. 11 is a flowchart of an example procedure to offer the parts catalog system of FIG. 1 to an operator;
FIGs. 12A and 12B are display examples of a GUI offered by the parts catalog system of FIG. 1;
FIG. 13 is a display example of a GUI; and
FIG. 14 illustrates examples of a window to display an installation diagram.

### DETAILED DESCRIPTION OF PREFERRED EMBODIMENTS

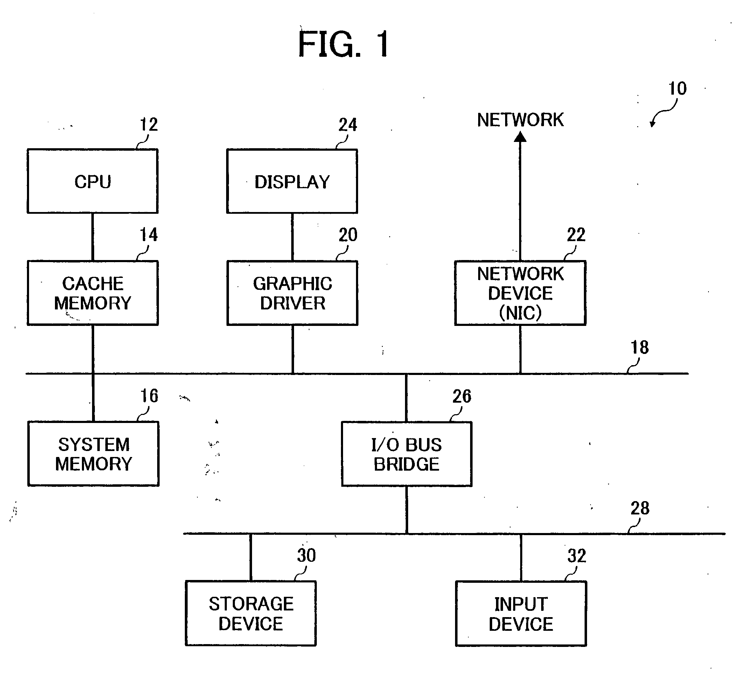

In describing preferred embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner. Referring now to the drawings, wherein like reference numerals designate identical or corresponding parts throughout the several views, particularly to FIG. 1, a parts catalog system 10 according to an embodiment is described.

FIG. 1 illustrates a hardware configuration of the parts catalog system 10. The parts catalog system 10 may use a computer or workstation and includes a central processing unit (CPU) 12, a cache memory 14, a system memory 16, a system bus 18, a graphic driver 20, a network device 22, and a display 24. The CPU 12, the cache memory 14, and the system memory 16 connect to another device or driver of the parts catalog system 10, for example, the graphic driver 20 and/or the network device 22, via the system bus 18. The graphic driver 20 connects to the display 24 via the system bus 18.

The cache memory 14 is a high-speed memory capable of storing data used by the CPU 12, which may help the CPU 12 to process the data at high speed. For example, the CPU may search a database for a keyword according to a program. The system memory 16 includes solid-state memory devices, for example, a RAM and a DRAM that is used as a main memory accessed by the CPU 12. The graphic driver 20 serves as a means for causing the display 24 to display processing results by the CPU 12 on its screen. The parts catalog system 10 connects to a network via the network device 22. An operator may access the parts catalog system 10 via the network from a client computer (not shown).

The parts catalog system 10 further includes an input/output (I/O) bus bridge 26, an input/output (I/O) bus 28, a storage device 30, and an input device 32. The I/O bus bridge 26 connects to the system bus 18. The I/O bus 28 may be a PCI (peripheral component interconnect) bus. The storage device 30 is provided downstream of the I/O bus bridge 26 and connects to the I/O bus 28 by using an integrated drive electronics (IDE) interface, an AT attachment (ATA) interface, an AT attachment packet interface (ATAPI), a serial ATA (SATA), a small computer system interface (SCSI), or a universal serial bus (USB). The input device 32 connects to the I/O bus 28 via a bus, for example, a USB. The input device 32 may include a keyboard and/or a pointing device, for example, a mouse. The input device 32 may receive a keyword and/or a command input by an operator, for example, a system administrator.

The CPU 12 may be PENTIUM and its successors up to PENTIUM IV, a CPU compatible with PENTIUM, POWER PC, or MIPS.

Examples of an operating system (OS) for the parts catalog system 10 include MACOS, WINDOWS, WINDOWS SERVER 200X, UNIX, AIX, LINUX (, and other proper operating systems. Further, the parts catalog system 10 includes and executes an application program that is operable with the OS included in the parts catalog system described as above and is written in an object-oriented programming language. Examples of the object-oriented programming language include C++, VISUAL C++, VISUAL BASIC, JAVAJAVA, Perl, and Ruby.

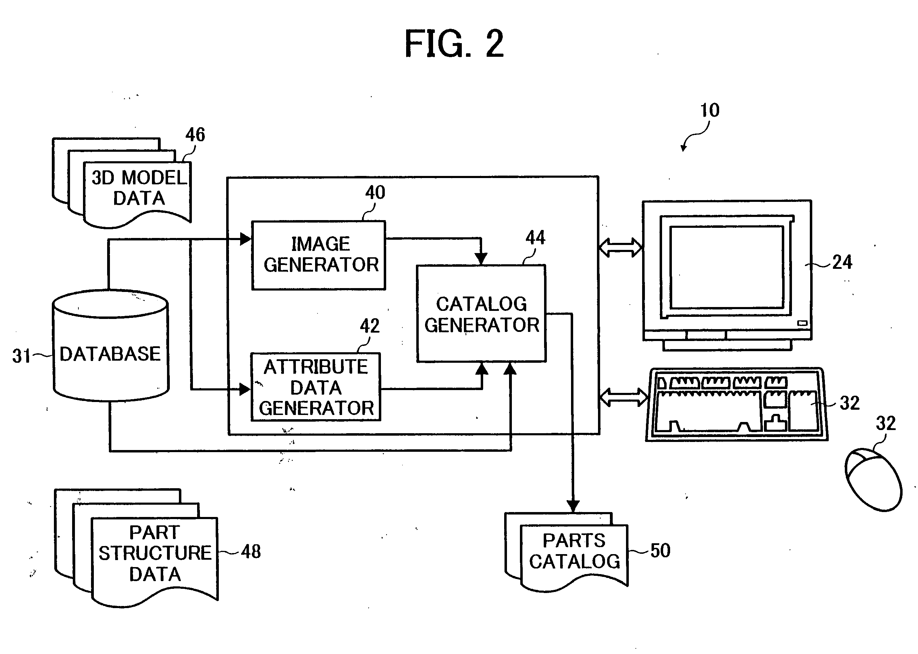

FIG. 2 illustrates a software configuration of the parts catalog system 10. The parts catalog system 10 includes an image generator 40, an attribute data generator 42, and a catalog generator 44. The storage device 30 stores a database 31 in which three-dimensional (3D) model data 46 for parts and/or units and part structure data 48 are included. The word "unit" means a group of parts. Each part may belong to a unit. The part structure data 48 may hierarchically include a part name, a use, a related unit name, and/or a related product name.

The 3D model data 46 is 3D data of each part. For example, the 3D model data 46 may be in 3DS, MDT, or DXF format and is not limited to the above format. By using the 3D model data, a parts catalog that may provide stereoscopic relations among parts may be generated. An operator may create a part list via a GUI (graphic user interface), graphically recognizing the relation of a part in a unit. Not only planer relations, but also three-dimensional relations between parts may be recognized. By effectively using the GUI, the time required to search a part may be shortened.

The image generator 40 reads out the 3D model data 46 of a part and/or a unit from the database 31 and creates an illustration image (illustration) and installation diagram data per part using the 3D model data 46. The installation diagram data is the data of a diagram to show where the part is installed in a unit. The illustration and the installation diagram data are registered as images data.

The attribute data generator 42 reads out the 3D model data 46 from the database 31 and generates attribute data. The attribute data includes region information corresponding to special data of a part and position data to designate a position of the part in the installation diagram. The attribute data may be stored in the database 31.

The catalog generator 44 receives each data generated by the image generator 40 and the attribute data generator 42. The catalog generator 44 further reads out the part structure data 48 and generates a keyword to search the illustration data and the installation diagram data corresponding to each part. The catalog generator 44 may register the keyword in the database 31 in association with the corresponding illustration data and installation diagram data and may create a parts catalog 50.

In an embodiment, a publicly known relational database may be used as the database 31. Any relational database capable of searching a part with a keyword by using a SQL statement may be used. An operator may input a keyword with the input device 32 that may be a keyboard or a mouse. The input device 32 may receive the keyword as an outside input and the parts catalog system 10 may search a part with the keyword and display an illustration of the part and an installation diagram as the search results on the display 24. The parts catalog system 10 may further obtain and display another data of illustration and/or another installation diagram of the part that are different in reduction ratio and/or viewpoint.

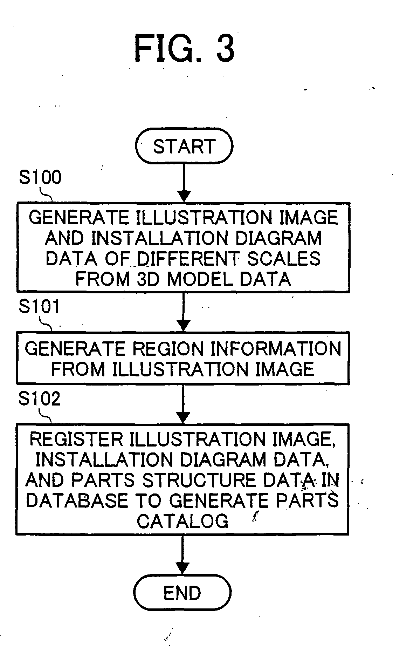

FIG. 3 is a flowchart of an example method to generate the parts catalog 50. When the parts catalog generation is started, the image generator 40 reads out and analyzes the 3D model data 46 to generate an illustration, an installation diagram, and an installation diagram on a different enlargement/reduction ratio at S100.

To create the illustration of the part, apexes and line segments in its 3D model data are specified and a rendered image is formed on a closed surface. The rendered image is saved in GIF, JPEG, TIFF, PNG, BNP, or a format specific to a 3D CAD system used by the operator and stored in a proper storage region. Thus, the illustration of the part is generated. The part may be clearly shown when an outline of the illustration is colored in a different color from the rendering by using the region information.

The installation diagram data is generated based on the 3D model data processed at that time and corresponds to the viewpoint from which the illustration is generated. The installation diagram data is registered as an image and displayed as an entity model, a wire model, or a semi-transparent model. These models may be selected according to a purpose. Alternatively, the three models may be generated and the operator may switch between these models to display the installation diagram. The word "installation diagram" means a displayed image on the display 24 that is generated from the installation diagram data stored-in the database 31 and its hard copy.

The installation diagram data is stored in a proper size (scale relative to full-scale) in a default setting in an embodiment to satisfy the following two points. The operator may understand a relation between the part and the unit and may fully recognize a part in the installation diagram. The entire installation diagram may be displayed within a display region of the display 24.

In an embodiment, "enlargement" and "reduction" respectively mean enlargement and reduction in relation to the scale in the default setting. The operator may recognize the shape and the position of a part in a unit including the part because a plurality of enlargement/reduction ratios is offered.

For example, when the operator focuses on the part, its illustration is displayed near the center of the display region. In another example, when the operator tries to distinguish the part from the unit including the part, the parts catalog system 10 searches installation diagram data that displays the center of the installation diagram at the center of the display region.

At S101, the attribute data generator 42 generates the region information to indicate the boundaries of the illustration on the installation diagram data.

Various methods may be used to generate the region information. In an example, when an arbitrary part is looked from an arbitrary viewpoint, a rectangle that circumscribes a bottom surface of the part is determined (bottom rectangle). Simultaneously, a height of the part designated by the viewpoint is determined. Corresponding to the bottom rectangle and the height, a rectangular solid is determined. The region information may be obtained from the rectangular solid. In another example, picture elements (pixels) of an illustration data are analyzed per pixel. By discriminating whether or not a chrominance value and/or a luminous value are registered on each pixel, a rectangle circumscribing the illustration of the part is generated. A region within the rectangle is determined as the region information.

To adjust the position of the illustration in the installation diagram, a position data to relate a specific pixel, for example, a center pixel of the illustration data, with a center pixel of the installation diagram data is generated as attribute data.

At 5102, the catalog generator 44 accesses the part structure data in the database 31. The catalog generator 44 obtains data included in the part structure data, for example, a part name, a related unit name, and a related product name and registers these data in the database 31 in relation with the data generated at S100 and/or S101.

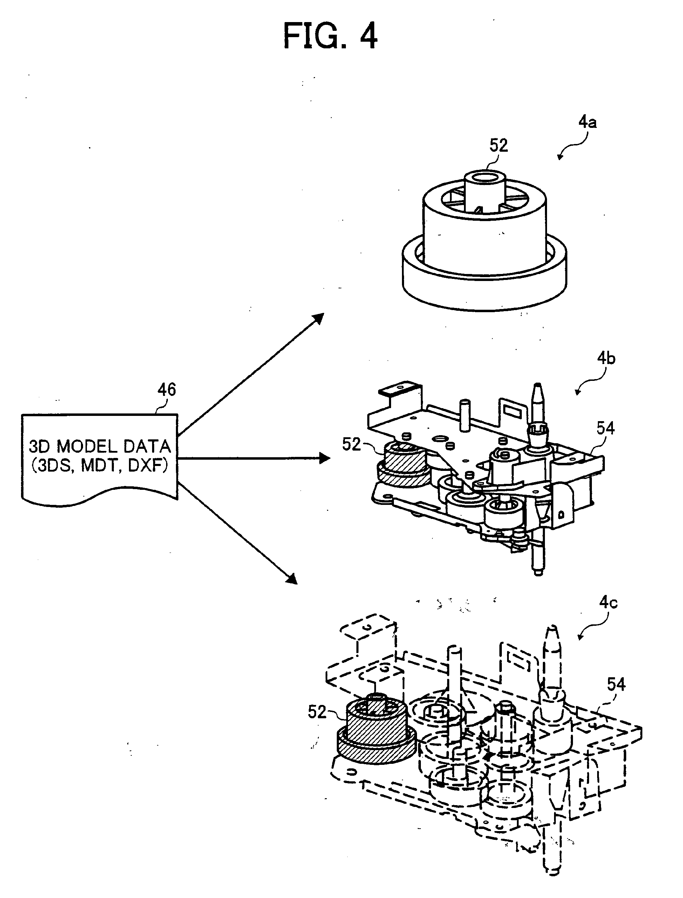

FIG. 4 illustrates illustration 4a and an installation diagrams 4b and 4c as examples. The illustration 4a is an illustration of a part 52 generated through a rendering according to the shape of the part 52 and has a 3D appearance.

The installation diagram 4b is a display example of the installation diagram data of a unit 54 in which the part 52 is installed. The unit 54 is shown as an entity model. The part 52 may be differently colored from other parts included in the unit 54 to distinguish the part 52. The top of the part 52 is partly hidden by a member above the part 52.

The installation diagram 4c shows the unit 54 as a semi-transparent model and the part 52 as an entity model to highlight the part 52. Instead of the semi-transparent model, the installation diagram data may be displayed as a wire model according to designation by the operator and/or according to a specific purpose.

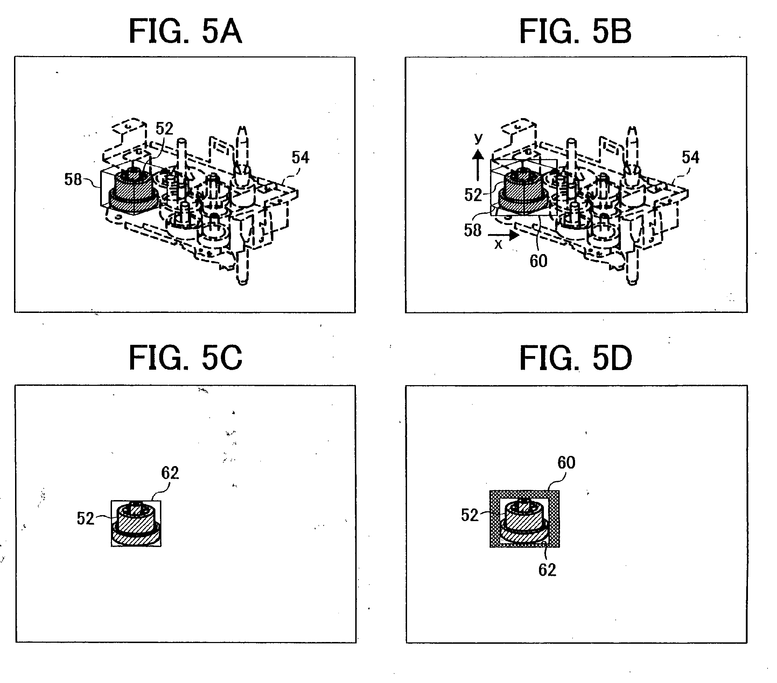

Referring to FIGs. 5A, 5B, 5C, and 5D, processes for the illustration analysis and the region information generation by the attribute data generator 42 (S101 in FIG. 3) are explained. FIGs. 5A and 5B are installation diagrams of the part 52. In a first method, a bottom rectangle circumscribing the bottom surface of the part 52 is determined according to the viewpoint after the outline of the part 52 is determined as illustrated in FIG. 5A. Simultaneously, the height of the part 52 designated by the viewpoint is calculated and a rectangular solid 58 housing the part 52 is determined. Maximum values and minimum values of x-axis coordinates and y-axis coordinates of the rectangular solid 58 are obtained to determined a two-dimensional rectangle 60 as illustrated in FIG. 5B. The rectangle 60 is registered as the region information. The region information may be quickly obtained through the first method.

Alternatively, in a second method, a minimum rectangle housing the part 52 may be generated as illustrated in FIG. 5C. Pixels of the illustration data may be discriminated whether or not a chrominance value and/or a luminous value is registered thereon (pixel discrimination). Region information (boundary pixels) is determined based on the pixel discrimination. When the region information specifying the part 52 is determined, maximum values and minimum values of x-axis coordinates and y-axis coordinates of region information are obtained. The x-axis direction and y-axis direction are defined as directions that are perpendicular to each other. The region information is determined as a rectangle 62 enclosed with four line segments determined by the maximum and minimum x-axis coordinates and the maximum and minimum y-axis coordinates and four intersections thereof. Though the second method may take longer time than the first method to obtain the region information, the region information by the second method may be more accurate than the first method.

The rectangular solid 58 may be looked as a two-dimensional rectangle when the part 52 is squarely viewed from front, above, or a side. Therefore, similar region information may be obtained through either of the above two methods when the installation diagram data in which the part is squarely viewed from front, above, or a side is offered to the operator. However, the region information obtained through the above two methods may be different in the case of a perspective view in which the part is viewed at an angle.

FIG. 5D illustrates the region information by the first method as the rectangle 60 and the region information by the second method as the rectangle 62. The area of the illustration of part 52 is larger when determined by the first method than when determined by the second method (pixel discrimination). In terms of impression received by the operator, the region information may be desirably determined by the pixel discrimination. In an embodiment, any region information capable of indicating a relative position of a part in an installation diagram of the part may be used.

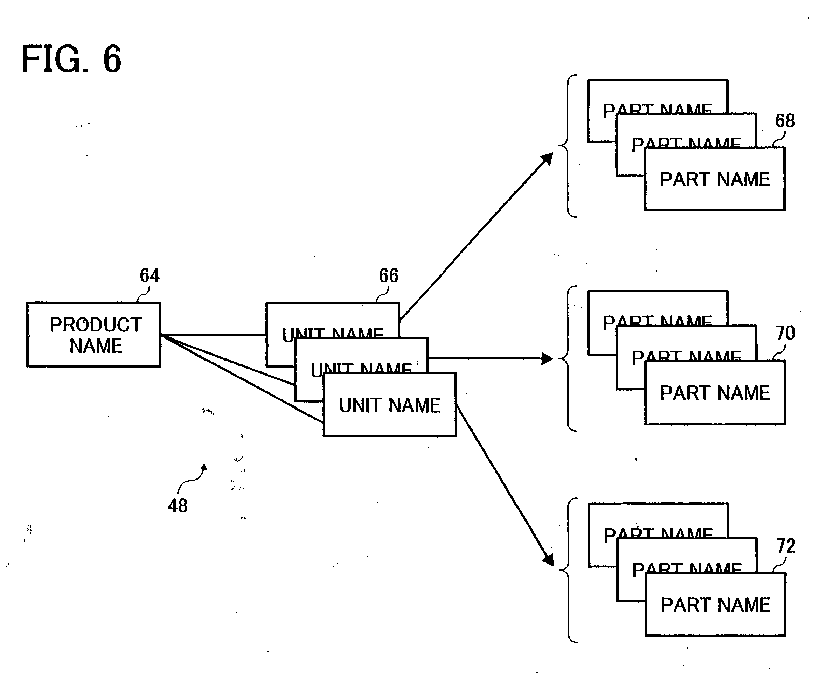

FIG. 6 illustrates an example structure of the part structure data 48. In the part structure data 48, a product name 64, a plurality of unit names 66, and a plurality of part names 68, 70, and 72 are hierarchically registered (hierarchical structure). The hierarchical structure may be offered as part structure information. In the part structure data 48, the product name 64, relative positions of the units, and/or parts arrangement in each unit may be written as text or in a structured language, for example, HTML and XML. These data may be obtained through various parsers and used to generate keywords.

The operator may create a parts list by searching a product name, a unit name, and/or a part name with a keyword. In an embodiment, the illustration, the installation diagram data, and/or the region information may be used to identify the part 68, 70, or 72. Further, in an embodiment, a diagram showing a relative position of a unit in a product may be displayed when a data structure to show a relative position of the unit in the product is prepared.

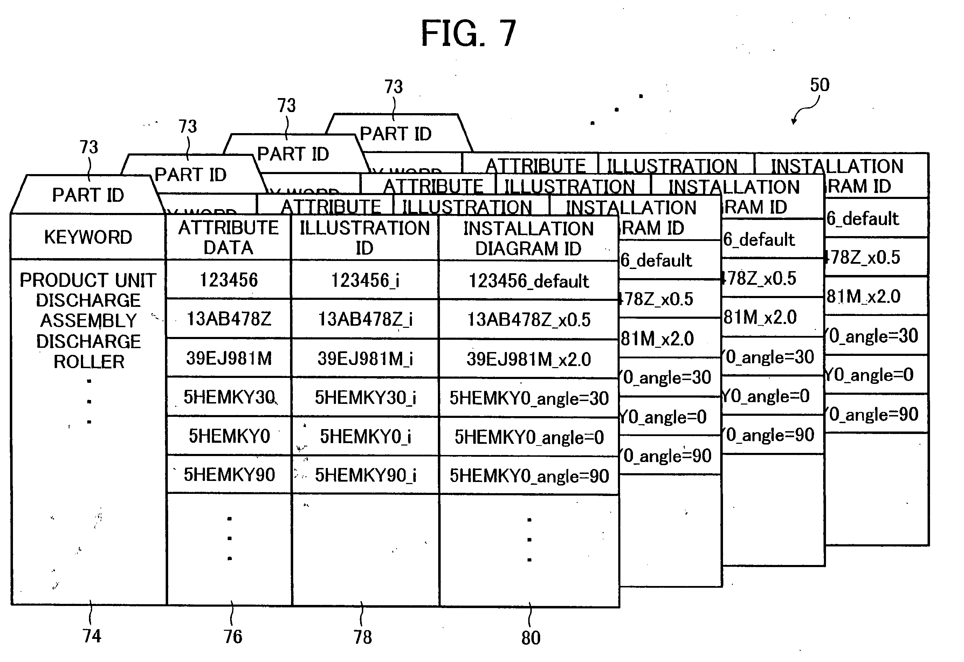

FIG. 7 illustrates a data structure of the parts catalog 50. As illustrated in FIG. 7, the parts catalog 50 may include a plurality of records 73 that are generated per part. Each record 73 may include data regarding one part and may be controlled per part identification (ID) number, for example, serial number. Each record 73 includes a keyword field 74, an attribute data field 76, a data field 78, and 80. A keyword may be registered in the keyword field 74 in correspondence with the part. Examples of the keyword are "discharge roller", "assembly", and "sheet discharge".

The region information and/or the position data of the illustration may be registered in the attribute data field 76. Further, the data field 76 may include a link to a file or a record storing settings for a possible viewpoint of an perspective view, installation diagram data of a front view, a true lateral view, a top view, a bottom view, and an assemble diagram according to rotation angle from the default setting. In an embodiment, attributes including a viewpoint, specification of models (wire model/semi-transparent), and/or enlargement/reduction ratios may be directly entered on the record 73.

Each attribute data is given an attribute data ID. An illustration ID as an identification value is given to each of the illustrations corresponding to the viewpoints specified by the attribute data ID. Similarly, each installation diagram is given an installation diagram ID. Data to specify the illustration ID is entered in the data field 78. The installation diagram ID is entered in the data field 80. An illustration specified by arbitrary attribute data may be referred. The illustration data registered in the database 31 may be linked to a predetermined or desirable file and/or address. The illustrations may be stored on another database and may be controlled in association with the part ID and/or the attribute data ID.

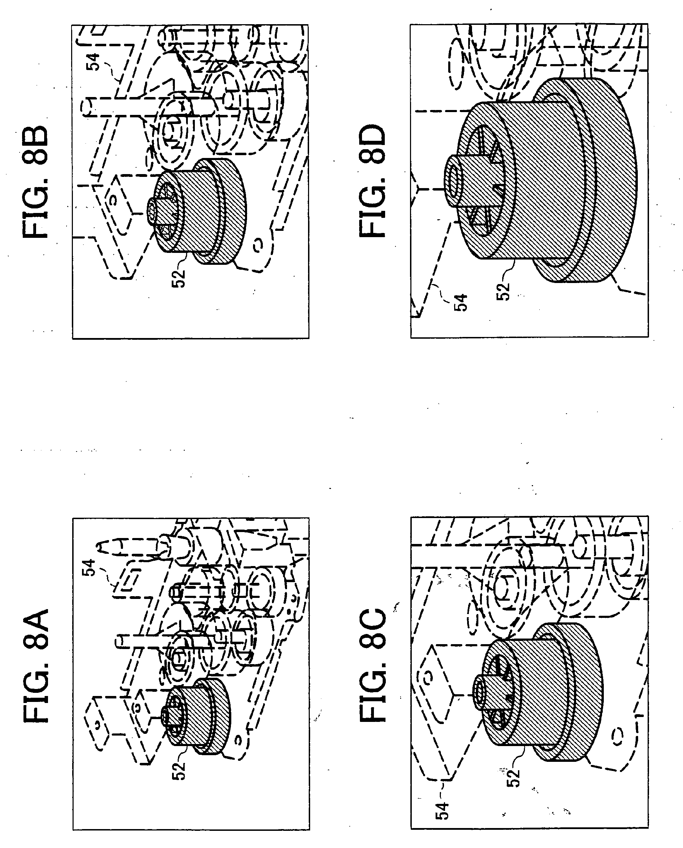

FIGs. 8A, 8B, 8C, and 8D illustrate examples of enlargement and reduction of the installation diagram of the unit 54 in which the part 52 is installed. FIGs. 8A and 8B are examples of the reduced installation diagram and a default installation diagram, respectively. FIGs. 8C and 8D are examples of the installation diagram enlarged from the default setting.

In the database 31, data of a plurality of installation diagrams with different scales is stored per part. When the parts catalog system 10 receives a command from an operator through the input device 32, the parts catalog system 10 searches the installation diagram data to display an enlarged and/or a reduced installation diagram from the default setting.

The operator may request a reduced installation diagram to observe a relative position of the part 52 in the unit 54. For the above purpose, the center of the unit 54 is desirably indicated near the center of the display region as in FIG. 8A. Therefore, the parts catalog system 10 may register, search, and display a reduced installation diagram data to indicate the center of the unit 54 near the center of the display region.

On the other hand, the operator may request an enlarged installation diagram to focus on the configuration around the part 52 and/or observing the part 52 in detail. For the above purpose, the part 52 is desirably indicated near the center of the display region as illustrated in FIGs. 8C and 8D that are different from the installation diagram 8A in which almost the entire unit 54 is indicated. Therefore, the parts catalog system 10 may register, search, and display an enlarged installation diagram data to indicate the part 52 near the center of the display region. Further, the operator may specify an area to be displayed on the screen, and the specified area may be enlarged on the screen in response to the area specification by the operator.

In an embodiment, instead of registering the installation diagram data as image data, the installation diagram data may be generated from the 3D model data in response to a command from the operator, though it may take longer time to display the installation diagram.

The display method of the installation diagram may be selected in accordance with the performance of the workstation and/or computer used to display the installation diagram.

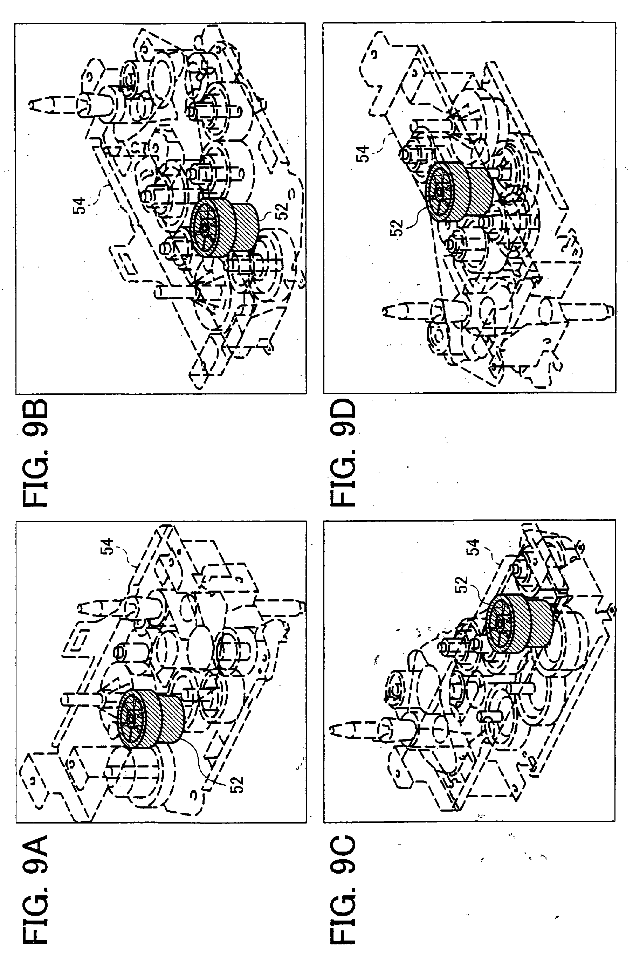

FIGs. 9A, 9B, 9C, and 9D are examples of installation diagram displayed on the display 24. In each of FIGs. 9A to 9D, the unit 54 is shown as a semi-transparent model on which the illustration of the part 52 in an opaque color is superimposed.

The region information may be used to highlight the illustration of the part 52. The pixels specified by the region information may be differently colored from the color used in rendering. To obtain closer region information, vector data, for example, a Bezier curve, may be registered in the database 31. In FIGs. 9A, 9B, 9C, and 9D, the unit 54 is rotated clockwise. Installation diagram data with desirable rotation angles and desirable scales may be registered to be sequentially offered in response to a command from the operator.

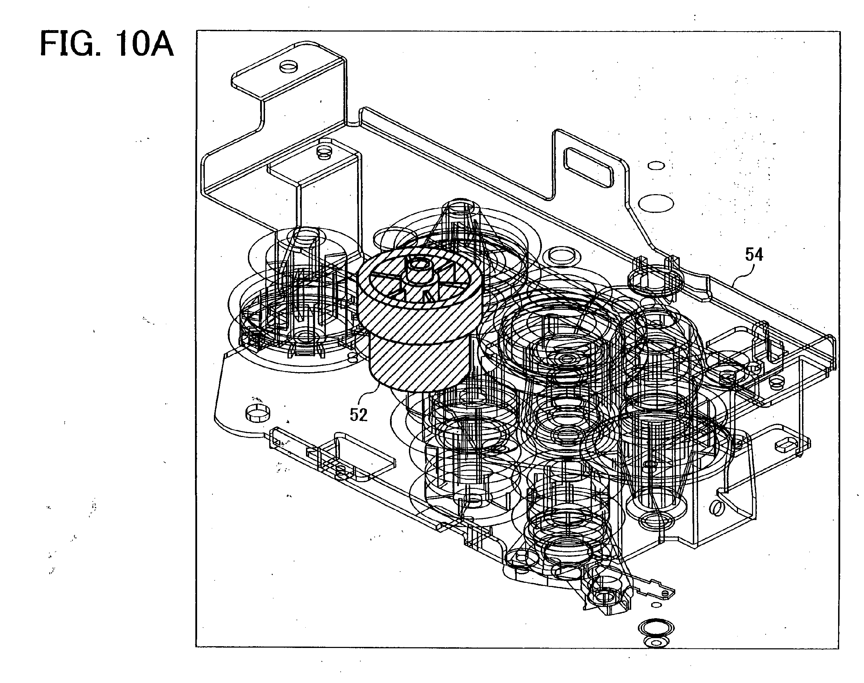

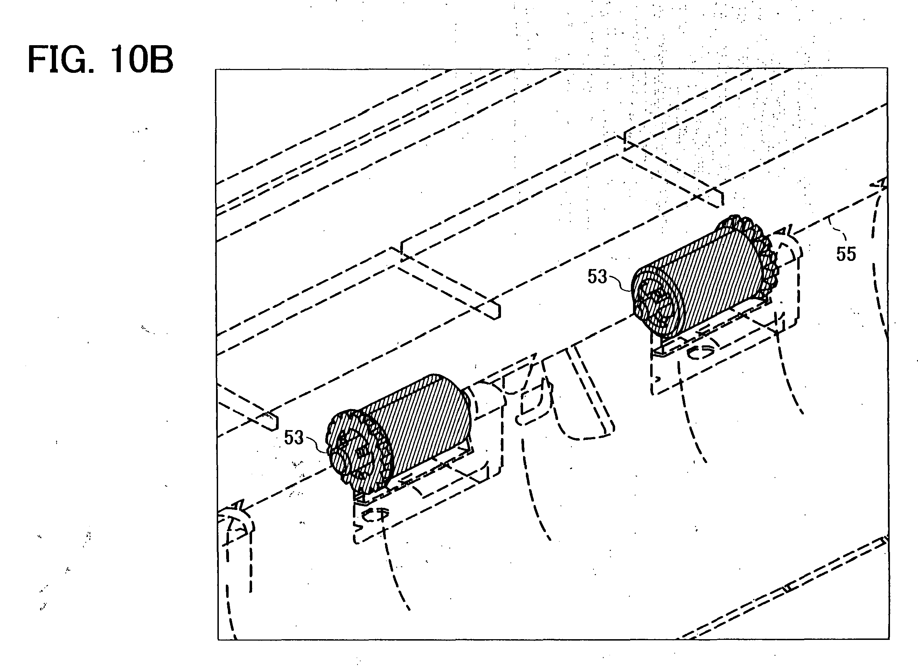

FIGs. 10A and 10B are examples of installation diagram. In FIG. 10A, the unit 54 is shown as a wire model except for the part 52. The illustration of the part 52 is shown in an opaque color and is superimposed onto or incorporated in the unit 54. The wire model in FIG. 10A may be registered on the parts catalog 50 and selected to highlight the part 52 as required.

FIG. 10B is an example of a semi-transparent model similarly in FIGs. 9A to 9D and illustrates a pair of parts 53 installed in a unit 55. FIG. 10B is an example to indicate a relative relation between the parts 53 and/or the quantity of the parts 53 in the unit 55.

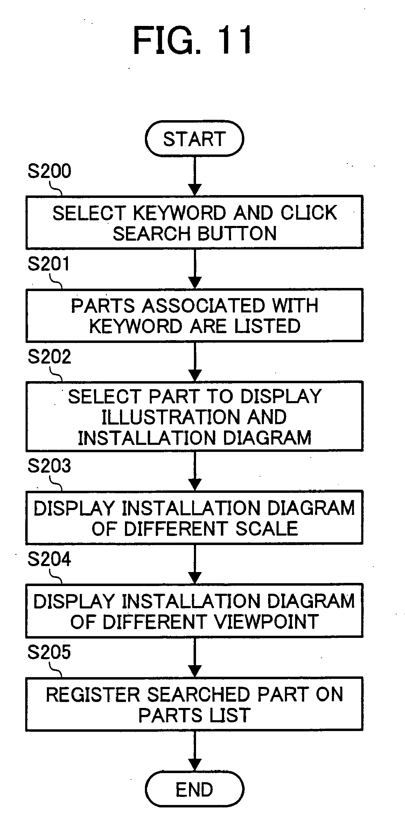

FIG. 11 is a flowchart of an example procedure to offer a parts catalog to the operator by using the parts catalog system 10. The operator may obtain necessary information of a part and create a part list or order a part by using the parts catalog system 10, without referring to a part table.

The procedure is started when the operator activates the parts catalog system 10. On the screen of the display 24, a list of keywords is displayed as a pull-down menu of a keyword field. The operator selects one of the keywords from the pull-down menu and clicks a search button at S200. The CPU 12 may search a part with the keyword according to a program and a list of parts associated with the keyword is displayed on the display 24 as a search result at S201. The operator put a mouse cursor on or clicks one of the parts to select the part at S202. A part name, a part ID, and an illustration of the part are displayed on the display 24. Further, a hyperlinked installation diagram of the part may be displayed.

At S203, the operator may change the scale of the installation diagram by a mouse event, for example, wheel rotation or click on a right mouse button. The parts catalog system 10 accepts the mouse event and searches installation diagram data with the scale corresponding the amount of mouse event and displays the installation diagram.

When the operator desires to view the installation diagram and/or the part from a different viewpoint, the operator may specify the viewpoint by a mouse event, for example, moving the mouse with the wheel depressed at S204. The parts catalog system 10 searches an installation diagram data viewed from the viewpoint specified by the amount of mouse event and displays the installation diagram.

At S205, the operator decides the searched part as a part to be on a part list, for example, by pushing a decision button. The operator may enter the part ID on the part list. In this stage, the operator may order the part though the parts catalog system 10 by transmitting the part ID and the quantity of the part to a server via a network. The procedure to offer the parts catalog 50 is completed .

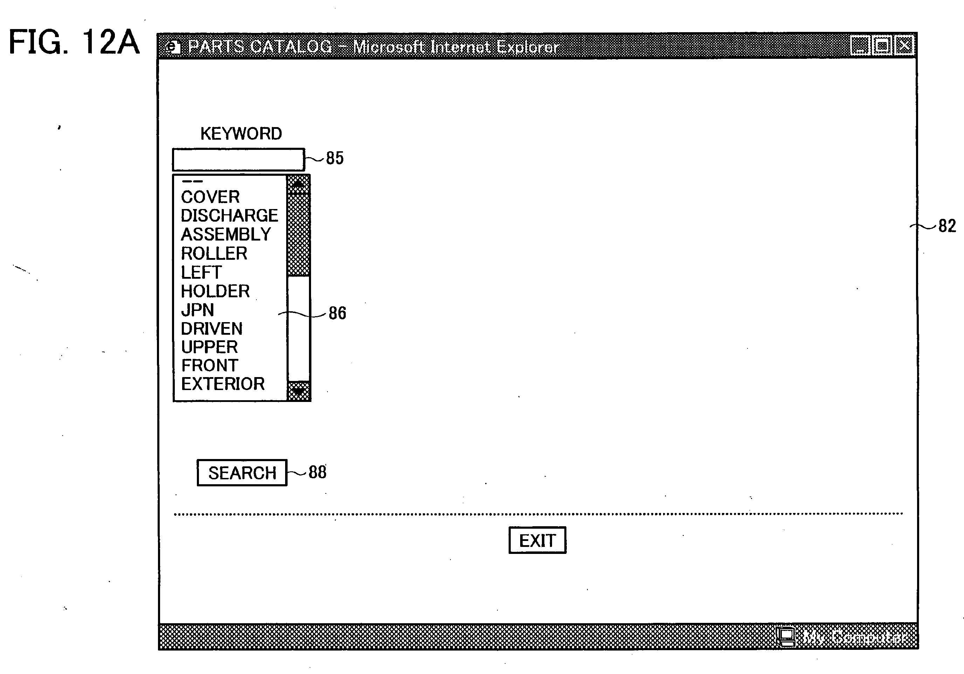

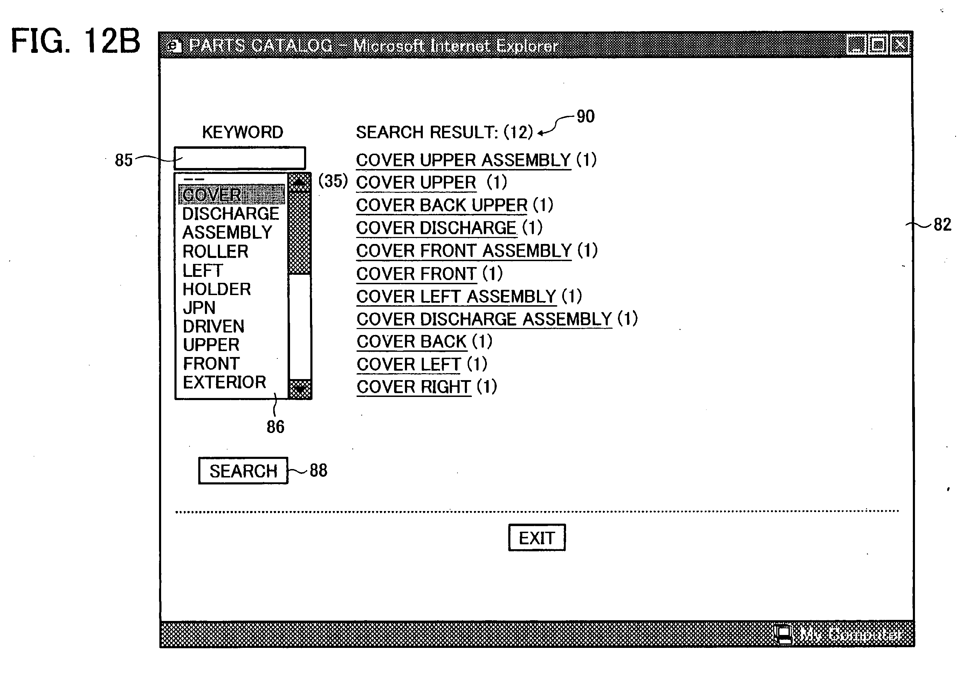

FIGs. 12A and 12B are display examples of a GUI offered by the parts catalog system 10. As illustrated in FIG. 12A, the GUI includes a window 82 in which a keyword field 85, a pull-down menu 86, a search button 88, a decision button, and an exit button are included. The operator enters a keyword in the keyword field 85 to search a part. The operator may select a keyword from a list of keywords in the pull-down menu 86 to be entered in the field 85. When the operator clicks the search button 88 to start the search, the parts catalog system 10 starts to search a part and/or a unit with the keyword.

FIG. 12B is a display example of a result of the search. The window 82 further includes a field 90 in which a list of parts and/or units searched with the keyword is shown. The part names and/or unit names in the field 90 are hyperlinked to its part ID and illustration. After each of the part names, the quantity of the part used in a unit is indicated. The operator selects one of the parts to check whether or not the part is a target part.

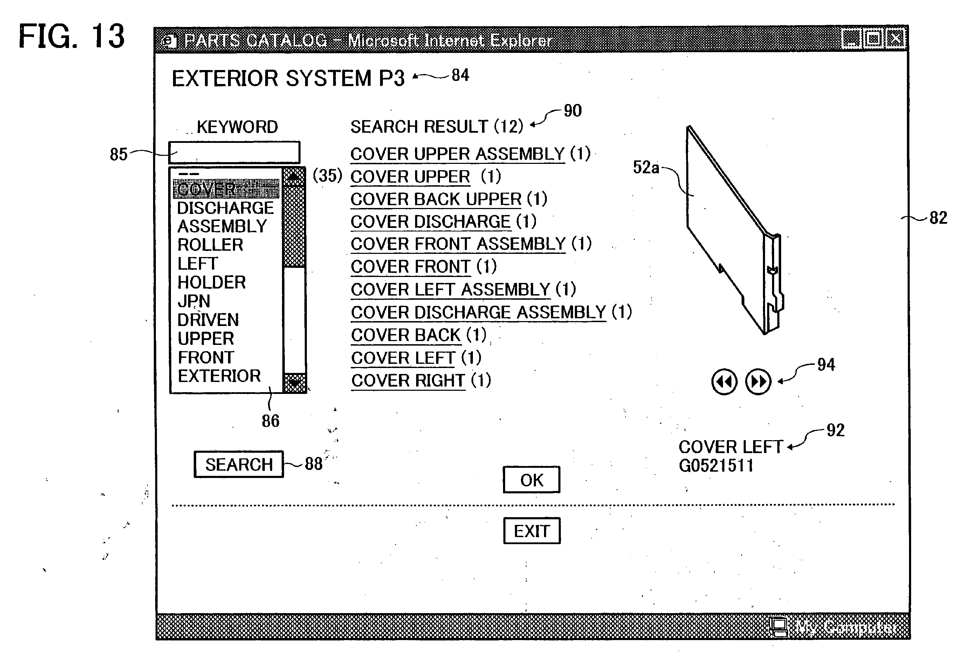

When the operator puts a mouse cursor on one of the part names, for example, "cover left", a field 84, a field 92, a pair of rotation buttons 94, and an illustration of the part (cover left) 52a appear on the window 82 as illustrated in FIG. 13.

The field 84 may indicate a unit name in which the selected part is included. For example, "Exterior system P3" is indicated in the field 84. The field 92 indicates a part name and a part ID. The viewpoint may be rotated clockwise or counterclockwise with the either of the rotation buttons 94. When the operator desires to view the part form a different viewpoint, the operator may click either of the rotation buttons 94. If the operator desires to put the part in a part list or to order the part, clicks the decision button after checking the part. The part and its quantity may be registered in the parts list. Therefore, parts list creation or the part ordering may be performed by using the parts catalog system 10.

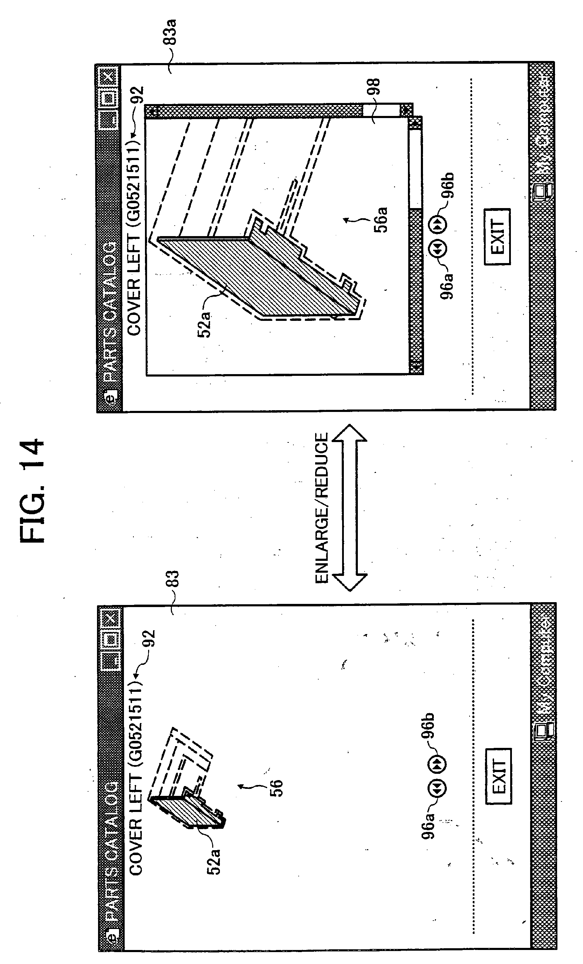

Further, an installation diagram on which the illustration of part 52a is superimposed may be provided in accordance with an outside input by the operator. When the operator clicks the part name in the field 92, a window 83 may be provided as illustrated in FIG. 14. The window 83 indicates an installation diagram 56 in which the illustration of part 52a is superimposed. The window 83 includes a field 92, a reduction button 96a, an enlargement button 96b and an exit button. The operator may recognize a state of the part 52a in a unit 55a. When the operator thinks the scale of the installation diagram 56 is not large enough, or desires to observe the details of the part 52a in the unit 55a, the operator may click the enlargement button 96b to enlarge the installation diagram 56 as illustrated in FIG. 14.

The window 83a illustrated in FIG. 14 includes a display region 98 in which an enlarged installation diagram 56a is indicated. The part 52a is displayed near the center of the display region 98. The position of the part 52a in the display region 98 may be adjusted according to what the operator focuses on so that the operator may better recognize the part 52a.

The above functions may be executed by a computer as a program written in an object-oriented programming language and/or using a software component, etc. For example, C, C++, JAVA, JAVA beans, JAVA applet, JAVASCRIPT, Perl, and/or Ruby may be used. The program executable by a computer may be stored in a recording medium readable by the computer.

This invention may be conveniently implemented using a conventional general purpose digital computer programmed according to the teachings of the present specification, as will be apparent to those skilled in the computer art. Appropriate software coding can readily be prepared by skilled programmers based on the teachings of the present disclosure, as will be apparent to those skilled in the software art. The present invention may also be implemented by the preparation of application specific integrated circuits or by interconnecting an appropriate network of conventional component circuits, as will be readily apparent to those skilled in the art.

Numerous additional modifications and variations are possible in light of the above teachings. It is therefore to be understood that within the scope of the appended claims, the disclosure of this patent specification may be practiced otherwise than as specifically described herein.

This patent application is based on and claims priority to Japanese patent application, No. JP2006-040628 filed on February 17, 2006 in the Japan Patent Office, the entire contents of which are incorporated by reference herein.

## Claims

1. A parts catalog system (10), comprising:
an image generator (40) to generate an illustration image of a part and installation diagram data in which the part is installed in a unit from three-dimensional model data (46);
an attribute data generator (42) to generate attribute data including region information by determining a region of the illustration image in the installation diagram data based on the three-dimensional model data (46);
a database (31) storing the illustration image and the installation diagram data; and
a catalog generator (44) to generate a keyword to search the part and to store the keyword in the database (31) in association with the illustration image, the installation diagram data, and the attribute data.

2. The parts catalog system (10) according to Claim 1, wherein the installation diagram data is displayed as at least one of an entity model, a semi-transparent model, and a wire model.

3. The parts catalog system (10) according to Claim 1 or 2, wherein the database (31) stores data of a plurality of installation diagrams in which relative positions of the part in a display region (98) are different according to scales of the installation diagrams.

4. The parts catalog system (10) according to Claim 1, 2 or 3, wherein the database (31) stores a plurality of illustration images of a part viewed from different viewpoints and data of a plurality of installation diagrams according to the viewpoints concerning the part.

5. A catalog generation method, comprising:
a step for generating an illustration image of a part and installation diagram data in which the part is installed in a unit from three-dimensional model data (46);
a step for generating attribute data including a region information by determining a region of the illustration image in the installation diagram data based on the three-dimensional model data (46); and
a step for generating a keyword to search the part and for storing the keyword in association with the illustration image, the installation diagram data, and the attribute data.

6. The catalog generation method according to Claim 5, further comprising:
a step for storing the installation diagram data as at least one of an entity model, a semi-transparent model, and a wire model in the database (31).

7. The catalog generation method according to Claim 5 or 6, further comprising:
a step for generating data of a plurality of installation diagrams in which relative positions of a part in a display region (98) are different according to scales of the installation diagrams, and
a step for storing the data of a plurality of installation diagrams in the database (31).

8. The catalog generation method according to Claim 5, 6 or 7, further comprising:
a step for generating a region information of the part from the illustration image to display the part in the installation diagram; and
a step for storing the region information in the database (31).

9. The catalog generation method according to Claim 5, 6, 7 or 8, further comprising:
a step for generating a plurality of illustration images of a part viewed from different viewpoints and data of the plurality of installation diagrams according to the viewpoints concerning the part; and
a step for storing the plurality of illustration images and the data of the plurality of installation diagrams in a database (31).

10. A computer program comprising program code means which, when executed on a computer system, instructs the computer system to effect the method of any one of claims 5 to 9.

11. A computer-readable recording medium, storing the program of Claim 10.

12. A parts catalog system (10), comprising:
a means for receiving a keyword input by an operator to search a part;
a database (31) storing the keyword, an illustration image of the part, and installation diagram data in which the part is installed in a unit in association with each other;
a means for searching the illustration image and installation diagram data, referring to the database (31);
a display for displaying the searched illustration image; and
a means for superimposing the illustration image onto the installation diagram data viewed from a similar viewpoint concerning the part by using attribute data to specify region information and a relative position of the illustration image in the installation diagram data in accordance with an input from outside and for displaying the installation diagram on the display.

13. The parts catalog system (10) according to Claim 12, further comprising:
a means for generating an installation diagram data as at least one of a semi-transparent model and a wire model in which the part is highlighted and for storing the installation diagrams data in a database (31).

14. The parts catalog system (10) according to Claim 12 or 13, wherein the database (31) stores data of a plurality of installation diagrams in which relative positions of the part in a display region (98) are different according to scales of the installation diagrams.

15. The parts catalog system (10) according to Claim 12, 13 or 14, wherein the database (31) stores a plurality of illustration images of a part viewed from different viewpoints and data of a plurality of installation diagrams according to the viewpoints concerning'the part, and
the parts catalog system (10) searches installation diagram data with a viewpoint and a scale similar to the viewpoint and the scale concerning the illustration image and displays the installation diagram data on which the illustration image is superimposed.
